# EUROPÄISCHE PATENTANMELDUNG

(11) **EP 1 265 408 A1**
(43) Veröffentlichungstag der Anmeldung: **11.12.2002**
(21) Anmeldenummer: 01810545.2
(22) Anmeldetag: 05.06.2001
(51) Int. Cl.: H04L 12/58, H04M 3/533

(54) **System und Verfahren zum Verteilen von Nachrichten**

(71) Anmelder: ABB RESEARCH LTD., 8050 Zürich (CH)
(72) Erfinder: Fabri, Andreas, 06130 Le Plan de Grasse (FR); Holle, Jorg, 5405 Baden-Dättwil (CH); Wimmer, Wolfgang, 5323 Rietheim (CH)
(74) Vertreter: ABB Patent Attorneys

(57) **Zusammenfassung**

Nachrichtenverteilsystem mit zumindest zwei verschiedenen Übertragungs-Mechanismen für Nachrichten, mit zumindest einer Eingangskomponente (2) zum Empfangen von Nachrichten über zumindest einen Mechanismus von zumindest einem Nachrichtensender (3), der Nachrichten mit diesem Mechanismus aussenden kann oder aussendet; zumindest einer Ausgangskomponente (5) zum Senden von Nachrichten an jeweils einen Nachrichtenabnehmer (4), wobei die Nachrichten über einen für den Nachrichtenabnehmer (4) geeigneten Mechanismus gesendet werden; und einem Verteilersystem (1) zum Weiterleiten der von der zumindest einen Eingangskomponente (2) empfangenen Nachrichten an die zumindet eine Ausgangskomponente (5). Die Erfindung ist ausserdem auf ein entsprechendes Verfahren gerichtet.

## Beschreibung

### Technisches Gebiet

Die Erfindung betrifft ein Nachrichtenverteilsystem mit mindestens zwei Übertragungsmechanismen für Nachrichten sowie ein Verfahren zur Verteilung von Nachrichten in einem solchen System.

### Stand der Technik

Ein im Stand der Technik bekannter Mechanismus zum Weiterleiten von Informationen, die von einem Sender stammen, zu einem oder mehreren beliebigen Abnehmern dieser Information ist der sogenannte Publish/Subscribe-Mechanismus. Beim Mechanismus des Publish/Subscribe sind zwei Rollen definiert. Ein Nachrichtensender (der sogenannte Publisher) verschickt Nachrichten und ein Nachrichtenabnehmer (der sogenannte Subscriber) empfängt sie. Die eigentliche Weiterleitung der gesendeten Nachrichten erfolgt jedoch beim Publish/Subscribe-Mechanismus nicht unmittelbar, sondern über einen Verteiler, der als zentrale Instanz Nachrichtensender und -abnehmer verwaltet und die Verteilung der Nachrichten übernimmt. Ein Nachrichtensender schickt daher alle von ihm gesendeten Nachrichten an lediglich eine Empfangsstelle und muß sich nicht um die Verteilung an verschiedene Nachrichtenabnehmer kümmern. Auch die Nachrichtenabnehmer erhalten Nachrichten von einer zentralen Stelle und nicht von verschiedenen Nachrichtensendern. Das Verteilersystem kümmert sich darum, daß die Nachrichten von den Sendern zu den Abnehmern gelangen. Während sich Nachrichtensender im allgemeinen nicht beim System anmelden müssen, ist für Nachrichtenabnehmer eine Anmeldung (sogenanntes Subscribe) erforderlich, um sie dem Verteilersystem bekannt zu machen. Wenn ein Nachrichtenabnehmer keine Nachrichten mehr empfangen möchte, kann er sich bei dem Verteilersystem wieder abmelden (unsubscribe). Die Rollen des Nachrichtensenders und Nachrichtenabnehmers können von beliebig vielen Anwendungen in beliebiger Kombination gleichzeitig besetzt werden. Dies bedeutet, daß sowohl 1:1 als auch 1:n Nachrichten (im Broadcast-Verfahren) verschickt werden können. Das Verteilersystem kann zusätzlich über Nachrichtenkanäle (Topics) verfügen, an welche die Nachrichtensender gezielt ihre Nachrichten senden können. Solche Nachrichtenkanäle können beispielsweise bestimmten Themen zugeordnet sein, zu denen Nachrichten verteilt werden sollen. Dementsprechend melden sich Nachrichtenabnehmer beim System unter Angabe von einem oder mehreren Nachrichtenkanälen an, dessen oder deren Nachrichten sie empfangen möchten.

Auf dem Markt existieren verschiedene Implementationen solcher Publish/Subscribe-Nachrichtensysteme. Sie können im allgemeinen dem Bereich der sogenannten Message-oriented-Middleware zugeordnet werden, dienen also der Kommunikation von Anwendungsprogrammen untereinander, ohne daß diese unmittelbar auf Funktionalitäten der Betriebssystemebene zugreifen müssen. Beispiele für solche Messaging-Systeme sind beispielsweise das Java-Messaging-System (JMS; Firma Sun)konforme Systeme, MessageQ (Bea-Systems), MQ-Series (IBM) und MSMQ (Microsoft).

Alle diese Nachrichtenverteilsysteme setzen auf Betriebssystemen auf und verwenden zur Nachrichtenverteilung die in den jeweiligen Betriebssystemen üblichen Protokolle, wie beispielsweise IP oder NetbioS und darüber liegende Transportschichten.

Auf Grund der Einschränkung auf einen einheitlichen Transportmechanismus für die Nachrichten sind die existierenden Messaging-Systeme jedoch in heterogenen Netzwerksystemen zur Nachrichtenverteilung nicht geeignet. So kann es beispielsweise in komplexen Versorgungssystemen notwendig werden, Nachrichten, beispielsweise von einer Energieversorgungsunterstation, an ein Wartungspersonalteam zu senden, das lediglich über ein Faxgerät verfügt. Bei bisherigen Nachrichtenverteilsystemen würde dieser Ansatz an der Anmeldung eines entsprechenden Geräts beim Verteilersystem, aber auch an der Nachrichtenaufbereitung über diesen Mechanismus scheitern.

Auch im Bereich der Consumer-Telekommunikation existieren Nachrichtenverteilsysteme, beispielsweise das Broadcasting von SMS-Nachrichten. Auch diese bieten jedoch keinen einheitlichen Ansatz für den Wechsel von einem Übertragungsmechanismus zu einem anderen.

Unter einem Übertragungsmechanismus sind hierbei zusammengefaßt die Elemente zu verstehen, welche zur Übertragung einer Information verwendet werden. Hierzu zählen physikalische Komponenten wie Telefonleitungen oder Netzwerkkabel, Netzwerktransmitter etc., sowie auch die von ihnen verwendeten elektrischen und logischen Übertragungsprotokolle, wie beispielsweise das Faxübertragungsprotokoll, die spezifische Kodierung von Nachrichten in Funktelefonnetzen, oder Computernetzwerkprotokolle wie TCP/IP oder ähnliches.

Es ist daher Aufgabe der vorliegenden Erfindung, ein System bereitzustellen, mit dem Nachrichten von verschiedenartigen Sendern zu verschiedenartigen Nachrichtenabnehmern übermittelt respektive verteilt werden können.

### Darstellung der Erfindung

Diese Aufgabe wird erfindungsgemäß gelöst durch das Nachrichtenverteilsystem gemäß dem unabhängigen Patentanspruch 1, das Verfahren zur Nachrichtenverteilung gemäß dem unabhängigen Patentanspruch 17 sowie die Verwendung eines Middleware-Messageing-Systems zum Verteilen von Nachrichten gemäß dem unabhängigen Patentanspruch 26.

Weitere vorteilhafte Ausgestaltungen, Aspekte und Details der vorliegenden Erfindung ergeben sich aus den abhängigen Patentansprüchen, der Beschreibung und der beigefügten Zeichnung. Die vorliegende Erfindung stellt einen neuen Ansatz dar, ein Nachrichtenverteilsystem aufzubauen, das den von Message-oriented-Middleware (MoM) bekannten Mechanismus des themenbezogenen Publish/Subscribe auf beliebige andere Nachrichten basierte Bereiche überträgt, wie beispielsweise SMS, Email und anderen. Dadurch sind Nachrichtensender und Nachrichtenabnehmer im Verteilsystem nicht an bestimmte Typen, das heißt Personen oder Anwendungen, gebunden.

Der beschriebene Ansatz beruht auf der Ausnutzung der Eigenschaften von Messaging, das per Definition bereits Publish/Subscribe anbietet, kombiniert mit einem adaptierten Proxy-Mechanismus. Erlaubt ist dann zum Beispiel, daß sich dynamisch ändernde Publisher Nachrichten über einen Übertragungsmechanismus wie SMS versenden, und zwar ähnlich wie beim Broadcasting, aber an beliebige sich dynamisch ändernde Nachrichtenadressaten, seien dies Personen oder Anwendungen, das heißt Menschen, welche die Nachricht auswerten, oder Datenverarbeitungssysteme, welche diese Auswertung automatisch vornehmen, und über beliebige nachrichtenbasierte Mechanismen, wie zum Beispiel Email, SMS, Fax oder andere.

Die Erfindung ist daher zunächst gerichtet auf ein Nachrichtenverteilsystem mit zumindest zwei verschiedenen Übertragungsmechanismen für Nachrichten mit
zumindest einer Eingangskomponente zum Empfangen von Nachrichten über zumindest einen Mechanismus von zumindest einem Nachrichtensender, der Nachrichten mit diesem Mechanismus aussenden kann oder aussendet;
zumindest einer Ausgangskomponente zum Senden von Nachrichten an jeweils einen Nachrichtenabnehmer, wobei die Nachrichten über einen für den Nachrichtenabnehmer geeigneten Mechanismus gesendet werden; und
einem Verteilersystem zum Weiterleiten der von der zumindest einen Eingangskomponenten empfangenen Nachrichten an die zumindest eine Ausgangskomponente.

Das erfindungsgemäß verwendete Verteilersystem kann dabei im Sinne der vorliegenden Erfindung eine Message-oriented-Middleware darstellen, wie beispielsweise das Java-Messaging-System oder ein anderes vergleichbares System. Der Nachrichtensender ist im Sinne solcher Modelle der Publisher, während der Nachrichtenabnehmer des Subscriber ist. Der Übertragungsmechanismus ist im Sinne der vorliegenden Erfindung so zu verstehen wie in der Einführung beschrieben.

Die Eingangskomponente muß erfindungsgemäß in der Lage sein, Nachrichten über zumindest einen Übertragungsmechanismus empfangen zu können. Sie muß daher speziell für jeden Übertragungsmechanismus ausgelegt werden. Natürlich ist es vorstellbar, daß eine Eingangskomponente mehr als einen Übertragungsmechanismus gleichzeitig bedienen kann. Eine solche Multifunktionseingangskomponente könnte jedoch logisch stets wieder in Eingangskomponenten für jeweils nur einen Übertragungsmechanismus untergliedert werden.

In der Regel wird für jeden Übertragungsmechanismus eine Eingangskomponente zur Verfügung stehen, an die alle Nachrichtensender, die mit diesem Übertragungsmechanismus arbeiten, ihre Nachrichten senden. Auf diese Weise müssen die Nachrichtensender lediglich einen zentralisierten Anlaufpunkt zum Übersenden der Nachricht kennen. In sehr umfangreichen oder komplexen Systemen ist es allerdings vorstellbar, daß mehr als eine Eingangskomponente für jeden Übertragungsmechanismus zur Verfügung steht, beispielsweise um eine Überlastung von Eingangskomponenten bei einer großen Zahl von eintreffenden Nachrichten oder Laufzeitprobleme bei sehr weit auseinander liegenden Nachrichtensendern zu vermeiden.

Dazu im Gegensatz wird für jeden Nachrichtenabnehmer eine eigenständige Ausgangskomponente vorgesehen. Diese Ausgangskomponente muß wiederum in der Lage sein, Nachrichten mittels desjenigen Übertragungsmechanismus zu verschicken, den der jeweils zugeordnete Nachrichtenabnehmer beherrscht. Gegenüber dem Verteilersystem verhält sich jede Ausgangskomponente wie ein Proxy, das heißt, daß sie gegenüber dem Verteilersystem die Rolle eines Nachrichtenabnehmers übernimmt. Auf diese Weise ist es möglich, Verteilersysteme zu verwenden, die auf dem Markt verfügbar sind und die lediglich einen einzigen Übertragungsmechanismus beherrschen, beispielsweise den in üblichen Netzwerkstrukturen. Ein Beispiel für ein solches Verteilersystem ist das Java-Messaging-System.

Nachrichten in solchen nachrichtenbasierten Systemen beinhalten vereinfacht gesprochen zumeist sogenannte Verwaltungsinformationen, die der korrekten Zuordnung und Leitung der Nachricht von einem Sender zu einem Empfänger dienen und die eigentliche für einen Adressaten, beispielsweise eine Person oder einen Automaten bestimmte Information. Die Verwaltungsinformationen einer Nachricht sind in der Regel vorgegeben durch den verwendeten Übertragungsmechanismus.

Die eigentliche Information der Nachricht liegt jedoch ebenfalls in einem bestimmten Format vor, welches auch vom Übertragungsmechanismus abhängig sein kann, jedoch gleichermaßen von der Art der übertragenen Information. So wird eine einfache Textinformation ein anderes Format aufweisen als eine Bildinformation oder eine gesprochene Information.

Da die verwendbaren Formate, wie bereits gesagt, häufig vom Übertragungsmechanismus abhängen, kann es in vielen Fällen notwendig werden, ein Format in ein anderes Format zu überführen. Daher wird es bevorzugt, daß die Eingangskomponente, das Verteilersystem oder/und die Ausgangskomponente aufweist Mittel zur Konvertierung von Nachrichten eines Formats in Nachrichten desjenigen Formats, das der Nachrichtenabnehmer, der von der Ausgangskomponente bedient wird, lesen kann. Üblicherweise wird dieser Umwandlungsvorgang sogar in zwei Schritten erfolgen, wobei die Eingangskomponente einen Konvertierer enthält, der die in einem bestimmten Format vorliegenden Informationen in ein Zwischenformat, welches intern vom Verteilersystem verwendet wird, umwandelt, während die Ausgangskomponente oder vorgelagert das Verteilersystem einen weiteren Konvertierer aufweist, welcher in der Lage ist, die Informationen von dem Zwischenformat in das von der Ausgangskomponente verwendete Zielformat zu konvertieren. Diese Konvertierer können einen maßgeblichen Anteil an der Gesamtkomplexität des erfindungsgemäßen Nachrichtenverteilsystems aufweisen, wie nachfolgend an Hand von einigen Bespielen erläutert werden soll.

Falls beispielsweise die Eingangskomponente eine solche ist, die als Übertragungsmechanismus einen Faxversand aufweist, so gelangen die Informationen von den mit ihr verbundenen oder verbindbaren Faxgeräten als Bilddateien, das heißt als Pixelinformationen, an die Eingangskomponente. Diese konvertiert die Bildinformation in zumindest ein Zwischenformat, welches vom Verteilersystem verwendet werden kann. Beispielsweise kann eine Umwandlung der Faxinformationen in eine übliche Bilddatei, wie eine .jpg-Datei erfolgen.

Da verschiedene Systeme, wie beispielsweise SMS, jedoch nicht in der Lage sind, Bilddateien wiederzugeben, kann es darüber hinaus notwendig sein, als weiteres Zwischenformat eine textuelle Aufbereitung des Faxinhalts zu erstellen. Dies kann mit Hilfe eines OCR-Programms geschehen, welches in der Lage ist, die Textteile des Faxes zu extrahieren.

Welche konkrete Strategie für die Konvertierung von Formaten gewählt wird, hängt von der individuellen Implementierung des erfindungsgemäßen Systems ab. Es bietet sich jedoch an, stets zu versuchen, eine Konvertierung in das Format des kleinsten gemeinsamen Nenners aller möglichen angeschlossenen Systeme vorzunehmen.

Ein weiteres Beispiel einer Formatumwandlung ist der umgekehrte Weg. Eine Eingangskomponente zum Empfangen von SMS-Nachrichten aus Funknetzen wird diese in einen einfachen Text verwandeln, der als Zwischenformat an das Verteilersystem weitergeleitet werden kann. Soll dieser Text nunmehr an einen Nachrichtenabnehmer weitergeleitet werden, der als Übertragungsmechanismus eine Faxübertragung verwendet, so ist es notwendig, beispielsweise mit Hilfe eines geeigneten Druckertreiber-Programms, die Textinformationen in eine Faxgrafik zu verwandeln. Diese Umwandlung kann entweder von dem Verteilersystem oder auch unmittelbar von der Ausgangskomponente vorgenommen werden, wobei es aus Gründen der Programmiereffizienz (bei Verwendung einer marktüblichen JMS-Implementierung, zum Beispiel) bevorzugt werden wird, die Ausgangskomponente mit entsprechenden Konvertierungsmitteln auszustatten.

Ein weiteres komplexes Beispiel kann die Generierung von Sprachinformationen über eine Telefonleitung aus einer Textnachricht sein. Entsprechende Konvertierungsmechanismen sind mittlerweile auf dem Markt erhältlich, die in der Lage sind, Worte zu erkennen und in eine akustische Wiedergabe umzuwandeln.

Echte Bildinformationen können naturgemäß nicht in Textinformationen umgewandelt werden. Diese werden daher stets in geeigneten Bilddateien gespeichert, die eines der möglichen Zwischenformate des Verteilersystems sind. Ob diese Informationen weitergeleitet werden können, hängt mithin auch von den Übertragungsmechanismen zu den Nachrichtenabnehmern ab.

Die erfindungsgemäß verwendete Eingangskomponente hat eine Schnittstelle zum Empfangen von Nachrichten eines bestimmten Übertragungsmechanismus. Nachrichtenabnehmer, die sich beim System an- oder abmelden wollen, werden dies üblicherweise (Ausnahmen mögen Faxgeräte sein) tun, indem sie eine Nachricht in ihrem ihnen eigenen Übertragungsmechanismus verschicken. Es ist daher naheliegend und wird bevorzugt, daß die bei der Eingangskomponente ohnedies vorhandene Schnittstelle auch verwendet wird, um darüber Nachrichten über die An- und Abmeldung von Nachrichtenabnehmern zu empfangen. Es wird daher bevorzugt, daß die zumindest eine Eingangskomponente aufweist Mittel zum Anmelden und Abmelden von Nachrichtenabnehmern und/oder Nachrichtensendern bei dem Nachrichtenverteilsystem. Die Anmeldung von Nachrichtensendern kann beispielsweise in einem sicherheitssensitiven Umfeld sinnvoll sein, in dem die Identität aller Beteiligten festgestellt werden muß.

Eine Möglichkeit, zielgerichtet Informationen in einem Nachrichtenverteilsystem zu distributieren, besteht in der Möglichkeit, sogenannte Nachrichtenkanäle (Topics) vorzusehen. Diese können beispielsweise bestimmten Themenbereichen zugeordnet sein. Es wird erfindungsgemäß bevorzugt, daß das Verteilersystem solche logischen Kanäle aufweist, an die Nachrichten von dem zumindest einen Nachrichtensender geschickt werden oder geschickt werden können. Hierzu müssen die an den oder die Eingangskomponente/n geschickten Nachrichten von den Nachrichtensendern mit einer entsprechenden Information über einen Nachrichtenkanal versehen werden, an den die Nachricht innerhalb des Verteilersystems weitergeleitet werden soll. Bei der praktischen Umsetzung ist der Zuweisung von Nachrichtenkanälen praktisch keine Grenze gesetzt. Diese hängt ausschließlich vom Einsatzzweck und den Notwendigkeiten der Informations- und Nachrichtenstrukturierung innerhalb des Systems ab.

Bei Unterstationsnetzwerken mit einer Reihe von Geräten, welche gesteuert werden müssen, Meßwerte ermitteln, untereinander kommunizieren etc., kann mit einem solchen Nachrichtenverteilsystem beispielsweise zugleich eine Schnittstelle zu Wartungspersonal, beziehungsweise Wartungsgeräten, geschaffen werden. Typische Nachrichtenkanäle in einem solchen System könnten beispielsweise Nachrichten zu Fehlermeldungen, Nachrichten über statistische Informationen von Netzauslastung, Schaltvorgängen, Spannungen, Wasserflüssen etc., Schalt- und Meßwertnachrichten, sowie Nachrichten zur Steuerung von Geräten oder ihrer Konfiguration sein.

Um eine Weiterleitung eingegangener Nachrichten an den korrekten Nachrichtenkanal zu ermöglichen, muß die Information über den logischen Kanal, an den die Nachricht gerichtet ist, aus dieser extrahiert werden. Hierzu wird es bevorzugt, daß die Eingangskomponente Mittel zur Identifizierung eines logischen Kanals aufweist, an den eine empfangene Nachricht weitergeleitet werden kann oder weitergeleitet wird. Die solcherart extrahierte Information wird dann zusammen mit der umgewandelten Nachricht an das Verteilersystem weitergeleitet, das die Nachricht dann dem Nachrichtenkanal zuordnen kann.

Erfindungsgemäß ist für jeden angemeldeten Nachrichtenabnehmer eine Ausgangskomponente vorgesehen, welche an sie geleitete Nachrichten an den Nachrichtenabnehmer weitersendet. Da es nicht immer möglich bzw. praktikabel ist, für alle denkbaren, sich anmeldenden Nachrichtenabnehmer Ausgangskomponenten im erfindungsgemäßen Nachrichtenverteilsystem vorzusehen, sollten diese Ausgangskomponenten dynamisch bei der Anmeldung eines Nachrichtenabnehmers generiert werden. Dies kann vorzugsweise dadurch geschehen, daß die zumindest eine Eingangskomponente ein Einrichtmittel aufweist, welches Ausgangskomponenten für angemeldete, beziehungsweise sich anmeldende, Nachrichtenabnehmer einrichtet oder startet und welches die Ausgangskomponenten für sich abmeldende Nachrichtenabnehmer beendet. Auf diese Weise kann die gesamte Funktionalität für einen bestimmten Übertragungsmechanismus in jeweils einer Eingangskomponenten gekapselt werden.

Die Topologie des vorgestellten, erfindungsgemäßen Nachrichtenverteilsystems kann weitgehend an die Notwendigkeiten eines konkret implementierten Systems, beziehungsweise die Topologie eines unterliegenden zu steuernden respektive zu verwaltenden Systems, wie beispielsweise einem Unteranlagensystems der Energieversorgungstechnik, angepaßt werden. So ist es möglich Eingangskomponenten, Ausgangskomponenten und Verteilersystem gemeinsam auf einer Datenverarbeitungsanlage zu implementieren. Es ist jedoch genauso möglich, das erfindungsgemäße Nachrichtenverteilsystem als ein distributiertes, beziehungsweise verteiltes, System auszulegen, bei dem die Komponenten auf verschiedenen Geräten, wie beispielsweise Computern, Steuergeräten, Anzeigegeräten etc., oder speziellen Routern, wie Faxservern etc., untergebracht sind. Auch das eigentliche Verteilersystem kann distributiert ausgeführt sein. Je nach gewünschter Topologie des Systems müssen die technischen Gegebenheiten entsprechend angepaßt werden. Falls beispielsweise Ausgangskomponenten auf anderen Einheiten ausgeführt werden sollen als eine Eingangskomponente, die sie generiert, so sind netzwerkweite Mechanismen zur ferngesteuerten Generierung und Löschung solcher Ausgangskomponenten durch die sie generierenden und steuernden Eingangskomponenten vorzusehen. Soll beispielsweise das eigentliche Verteilersystem auf verschiedenen Einheiten lokalisiert sein, so muß gewährleistet sein, daß die netzwerkweite Steuerung der Einzelkomponenten des Verteilersystems ein konsistentes Gesamtsystem ergibt, welches in der Lage ist, die eingehenden Nachrichten in der korrekten Weise weiterzuleiten.

Neben der eigentlichen Information und der optionalen Angabe eines Topic sowie technisch bedingten Kodierungsinformationen für bestimmte Übertragungsmechanismen können die Nachrichten mit weiteren Verwaltungsinformationen versehen sein. Dementsprechend wird es bevorzugt, daß die zumindest eine Eingangskomponente Verwaltungsmittel zur Auswertung von in den Nachrichten enthaltenden Verwaltungsinformationen aufweist.

Solche Verwaltungsinformationen können beispielsweise konkrete Nachrichtenadressaten, Nachrichtenpersistenzen und Nachrichtenprioritäten sein. Bei der Angabe eines Nachrichtenadressaten ist es möglich, eine Nachricht einem bestimmten Nachrichtenabnehmer (sofern dieser angemeldet ist beziehungsweise dies irgendwann sein wird) zuzuleiten. Ein Nachrichtenadressat kann auch durch Eigenschaften, die ihm zukommen, spezifiziert werden statt durch die konkrete Angabe eines bestimmten Adressaten. So kann eine Nachricht innerhalb eines Stationsleitsystems, beispielsweise an die Email-Adresse eines bestimmten Wartungsingenieurs gerichtet sein, sie kann jedoch auch an einen spezifizierten Typ von Wartungsingenieuren gerichtet sein, beispielsweise solche mit einer bestimmten Qualifikation. Wenn sich ein Nachrichtenabnehmer eines solchen Wartungsingenieurs beim System anmeldet, übergibt er zugleich die Information, welche Qualifikation der Wartungsingenieur, der letztendlich die Nachricht erhalten wird, aufweist, so daß eine entsprechend kategorisierte Nachricht nach Anmeldung an den Nachrichtenabnehmer dieses Wartungsingenieurs geschickt wird.

Unter einer Nachrichtenpersistenz ist ein Zeitraum zu verstehen, welcher in der Nachricht mit angegeben ist und der festlegt, wie lange eine Nachricht beispielsweise zumindest im System verweilen muß oder wie lange sie längstens verweilen soll, beispielsweise weil sie danach veraltet ist.

Die Verwaltungsinformation "Nachrichtenpriorität" schließlich legt fest, als wie wichtig der Nachrichtensender die Nachricht einstuft. Auf diese Weise ist es möglich, Filter- und Priorisierungsinformationen in das System einzubringen, die dann beispielsweise die Reihenfolge der Weiterleitung von Nachrichten festlegen können oder welche eine prioritätsabhängige Signalisierung der Nachricht beim Nachrichtenabnehmer ermöglichen. So ist es beispielsweise möglich, Nachrichten, die an einen Nachrichtenabnehmer über den Faxmechanismus verschickt werden, bei hoher Priorität der Nachricht am oberen Rand des Faxes mit einem Eintrag wie "Wichtig! Wichtig! Wichtig!" zu versehen, um die Aufmerksamkeit eines Operators darauf zu lenken.

Der Begriff des Übertragungsmechanismus im Sinne der vorliegenden Erfindung weist eine größere definitorische Bandbreite auf. Er kann, muß hingegen nicht, ein bestimmtes physikalisches Übertragungsmedium beinhalten. Des weiteren kann er im üblichen OSI-Schichtenmodell nur eine oder aber auch mehrere Schichten umfassen. Er kann das Format der eigentlichen Nachricht beeinflussen, muß es aber nicht tun.

Beispiele für Übertragungsmechanismen im Sinne der vorliegenden Erfindung sind das Small-Message-System oder Short-Message-System (SMS) von GSM-Funknetzen, elektronische Post in Datenverarbeitungsnetzen, Faxübertragungen, der Internet-Relay-Chat-Mechanismus, oder das http-Protokoll zur Übertragung von HTML-Seiten und verwandten Informationen.

Das verwendete Verteilersystem kann ein auf dem Markt kommerziell angebotenes System, wie eine Java-Messaging-System Implementation oder MQ-Series von der Firma IBM(™) sein, es kann jedoch auch ein eigens für diesen Zweck implementiertes Middleware-Messaging-System sein.

Um Nachrichten auch Nachrichtenabnehmern zukommen zu lassen, die zum Zeitpunkt des Eingangs einer Nachricht beim erfindungsgemäßen Nachrichtenverteilsystem nicht am System angemeldet waren, kann es erforderlich sein, die Nachrichten zwischenzuspeichern. Es wird daher bevorzugt, daß das erfindungsgemäße Nachrichtenverteilsystem einen Speicher zum Zwischenspeichern dieser Nachrichten aufweist, wobei zusätzlich ein Zeitraum entweder allgemein oder für jede Nachricht individuell festgelegt werden kann, über den eine Nachricht im Speicher gespeichert bleibt, bis sie gelöscht wird.

In einer bevorzugten Ausführungsform ist das Nachrichtenverteilsystem der vorliegenden Erfindung in einem Energieversorgungsunterstationssystem implementiert, wobei die Nachrichtensender Einheiten des Systems sind und die Nachrichtenabnehmer Überwachungsgeräte, Steuerungsgeräte, Alarmgeräte und/oder Wartungsgeräte sind.

Insbesondere kann das Nachrichtenverteilsystem ein Computerprogrammprodukt sein, dessen Bestandteile zumindest teilweise direkt in den Hauptspeicher einer oder mehrerer (bei distributierter Auslegung) digitaler Datenverarbeitungsanlagen geladen werden können und dessen Programmbestandteile von der zumindest einen Datenverarbeitungsanlage ausgeführt werden können.

Die Erfindung ist weiterhin auf ein Verfahren zur Verteilung von Nachrichten in einem Nachrichtenverteilsystem gerichtet. Das erfindungsgemäße Verfahren weist folgende Schritte auf:
■ Empfangen einer Nachricht von einem Nachrichtensender über einen Übertragungsmechanismus an eine Eingangskomponente;
■ Übergeben der Nachricht von der Eingangskomponente an ein Verteilersystem;
■ Weiterleiten der Nachricht von dem Verteilersystem an zumindest eine Ausgangskomponente; und
■ Senden der Nachricht von der Ausgangskomponente an einen Nachrichtenabnehmer über einen für den Nachrichtenabnehmer geeigneten Übertragungsmechanismus,
wobei das Verfahren zumindest zwei verschiedene Mechanismen der Nachrichtenübersendung verwenden kann.

Das oben skizzierte Verfahren gemäß der Erfindung gibt die Betriebsweise beispielsweise der erfindungsgemäßen Vorrichtung wieder. Maßgeblich für die Erfindung ist die Übertragungsmechanismuswandlung, das heißt, daß eine Nachricht unabhängig vom Übertragungsmechanismus von einem Nachrichtensender, beziehungsweise zu einem Nachrichtenabnehmer, verteilt werden kann. Die verschiedenen Übertragungsmechanismen können dabei erfindungsgemäß alle auf der Eingangsseite, alle auf der Ausgangsseite oder in Kombinationen davon vorhanden sein. Das bezüglich des erfindungsgemäßen Nachrichtenverteilsystems Genannte, insbesondere Wirkungsweise und Vorzüge desselben, gelten auch für das hier vorgestellte Verfahren, so daß hiermit auf die erfindungsgemäßen Ausführungsformen des Nachrichtenverteilsystems vollinhaltlich Bezug genommen wird. Insbesondere sollen die bezüglich der Vorrichtung angegebenen Definitionen der verwendeten Ausdrücke in gleicher Weise verstanden werden.

Es kann vorgesehen sein, daß für jeden Übertragungsmechanismus eine Eingangskomponente verwendet wird. Es ist jedoch, wie oben bereits dargestellt, auch möglich Eingangskomponenten zu entwickeln, die mehr als einen Übertragungsmechanismus bedienen können beziehungsweise, insbesondere in verteilten Systemen, mehr als eine Eingangskomponente für einen bestimmten Übertragungsmechanismus bereitzustellen.

Die Eingangskomponente kann die Nachrichten von einem Verteilersystem in ein verwendbares Zwischenformat umwandeln. Die meisten auf dem Markt erhältlichen Verteilersysteme sind allerdings bezüglich der verwendbaren Datenformate transparent, das heißt, daß sie Daten, die sie empfangen so weiterleiten, wie sie diese erhalten haben. Nichtsdestotrotz müssen Formalismen beim Ein- und Ausleiten von Nachrichten in das Verteilersystem beachtet werden, beispielsweise Formatierungen bezüglich der Angabe von zu verwendenden Nachrichtenkanälen, Nachrichtenprioritäten, Persistenzen etc.

Unter Formatwandel im Sinne des erfindungsgemäßen Verfahrens ist daher einerseits die Umwandlung der eigentlichen Information in ein Zwischenformat zu verstehen, andererseits aber auch die Aufbereitung von in der Nachricht enthaltenen Metainformationen in eine Form, die das Verteilersystem sinnvoll verwenden kann. Auf Grund der Transparenz der Datenformate der eigentlichen Informationen ist es notwendig, um einen erfolgreichen Informationsübergang von einem Nachrichtensender zu einem Nachrichtenabnehmer zu gewährleisten, vorab festgelegte Zwischenformate für die eigentlichen Informationen zu verwenden. Geeignete Zwischenformate wären beispielsweise Textdateien und zumindest ein Typ von Bilddateien, wie beispielsweise .tif oder .jpg-Dateien.

Auf diese Weise benötigen Eingangskomponenten und Ausgangskomponenten nur ein begrenztes Set von Konvertierungsmechanismen, die leichter zu implementieren sind, als wenn alle möglichen Formate Berücksichtigung finden müßten. Zudem wird die Konfiguration des Systems vereinfacht, da keine komplexe Verhandlung, Vereinbarung und Speicherung der jeweils zu verwendenden Dateiformate stattfinden muß.

Ebenso wie bei der Eingangskomponente, welche die Nachricht in ein Zwischenformat umwandelt, ist es sinnvoll, daß die Ausgangskomponente eine vom Verteilersystem weitergeleitete Nachricht aus einem vom Verteilersystem verwendeten Zwischenformat in ein Format verwandelt, das über den von der Ausgangskomponente verwendeten Übertragungsmechanismus übertragbar ist und vom Nachrichtenabnehmer verarbeitet werden kann.

Vorzugsweise kann ein Nachrichtenabnehmer einer Eingangskomponente eine Nachricht schicken, welche eine Anmeldungs- oder Abmeldungsinformation aufweist, wobei das Verfahren dann folgende Schritte aufweist:
■ falls die Information eine Anmeldungsinformation ist, Anmelden des Nachrichtenabnehmers bei dem Nachrichtenverteilsystem und Einrichten einer Ausgangskomponenten, die dem Nachrichtenabnehmer für ihn bestimmte Nachrichten über einen für ihn geeigneten Übertragungsmechanismus senden kann;
■ falls die Information eine Abmeldungsinformation ist, Abmelden des Nachrichtenabnehmers bei dem Nachrichtenverteilsystem und Löschen der ihm zugeordneten Ausgangskomponente.

Für An- und Abmeldung von Nachrichtenabnehmern stehen verschiedene Möglichkeiten zur Verfügung. Ein Beispiel soll im folgenden erläutert werden.

Bei Anmeldung eines Nachrichtenabnehmers sendet dieser an die Eingangskomponente eine entsprechende Nachricht. Diese enthält neben der Information "Anmeldung erwünscht" gegebenenfalls die Angabe eines oder mehrerer Nachrichtenkanäle, deren Nachrichten der Nachrichtenabnehmer empfangen möchte, gegebenenfalls verwendbare Dateiformate, sowie notwendige weitere konkrete Adressierungsinformationen. Die Eingangskomponente erzeugt eine Ausgangskomponente, die als Proxy fungiert, beispielsweise durch Instantiierung eines Programmobjekts. Gleichzeitig schickt die Eingangskomponente eine Nachricht an einen speziellen reservierten Nachrichtenkanal des Verteilersystems, in dem die Information über den angemeldeten Nachrichtenabnehmer zwischengespeichert wird. Auf diese Wiese ist es möglich, auch bei einem Systemabsturz die Fähigkeit üblicher Middleware-Messaging-Systeme auszunutzen, in den Nachrichtenkanälen gespeicherte Nachrichten zu erhalten. Nach einem Absturz können alle Ausgangskomponenten von den neu gestarteten Eingangskomponenten wieder hergestellt und eine Verbindung zu den Nachrichtenabnehmern etabliert werden. Bei der Abmeldung eines Nachrichtenabnehmers schickt dieser wiederum eine entsprechende geeignete Nachricht an die Eingangskomponente, welche daraufhin die dem Nachrichtenabnehmer zugeordnete Ausgangskomponente beendet und dem Verteilersystem eine Nachricht sendet, die Anmeldungsinformation aus dem Nachrichtenkanal zu löschen. Es versteht sich, daß auch andere konkrete Implementierungen des An- bzw. Abmeldeverfahrens von der Erfindung mitumfasst sein sollen.

Die Nachrichten können im Verteilersystem gegebenenfalls für einen vorgegebenen Zeitraum zwischengespeichert werden, so daß sie neu angemeldeten Nachrichtenabnehmern gesendet werden können. Der vorgegebene Zeitraum kann hierbei auch als "unbegrenzt" festgelegt sein.

Weiterhin können die Nachrichten eine Prioritätsinformation enthalten, an Hand der das Verteilersystem die Reihenfolge der Weiterleitung der Nachrichten bestimmen kann.

Schließlich ist die Erfindung noch gerichtet auf die Verwendung eines Middleware Messaging Systems zum Verteilen von Nachrichten von Nachrichensendern an Nachrichtenabnehmer, wobei die Nachrichten zum und vom Middleware Messaging System über zumindest zwei verschiedene Übertragungs-Mechanismen versendet werden

### Wege zur Ausführung der Erfindung

Im folgenden soll die Erfindung weiter näher erläutert werden, wobei auf die beigefügte Zeichnung Bezug genommen werden soll, in der ein erfindungsgemäßes Nachrichtenverteilsystem schematisch dargestellt ist.

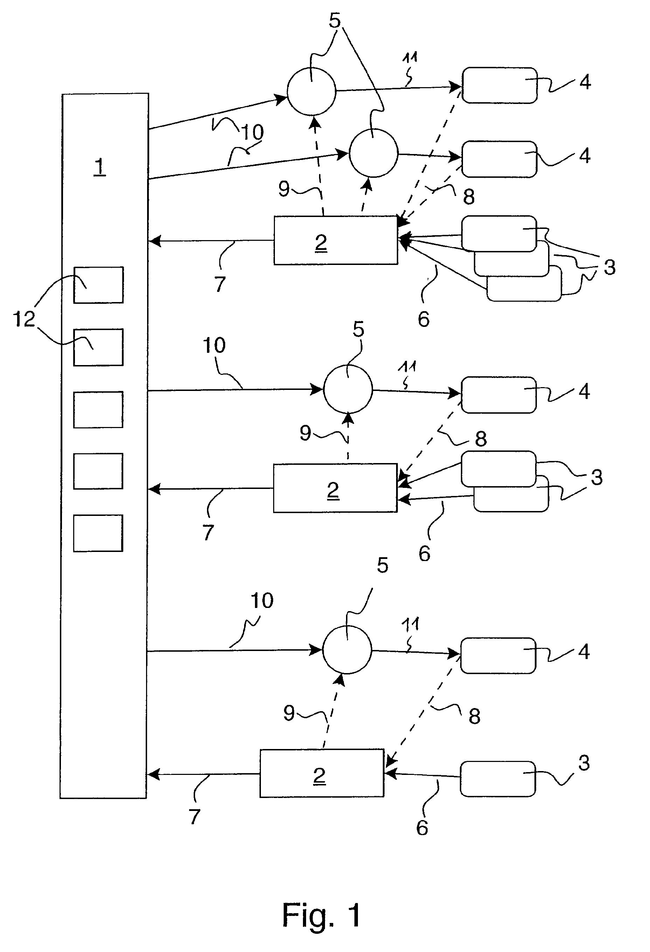

Die Basis des erfindungsgemäßen Nachrichtenverteilsystems gemäß Figur 1 bildet eine Message-oriented-Middleware, zum Beispiel ein Produkt basierend auf dem Java-Messaging-System, welches das eigentliche Verteilersystem 1 bilden. Die Eingangskomponente 2 empfängt Nachrichten von Nachrichtensendern 3 über eine geeignete Schnittstelle und die Wege 6. Die Nachrichten können beispielsweise als Publish-Befehle implementiert sein, die über den von der jeweiligen Eingangskomponenten bereitgestellte Übertragungsmechanismus in das erfindungsgemäße Nachrichtenverteilsystem eingeleitet werden. Die Eingangskomponente 2 leitet die gegebenenfalls entsprechend umgewandelte Nachricht über einen Weg, beziehungsweise über eine Schnittstelle 7, an das Verteilersystem 1 weiter, das intern eine Verteilung der Nachricht vornimmt, so daß diese über Schnittstellen 10 den Ausgangskomponenten 5 (zumindest denjenigen Ausgangskomponenten 5, welche die Nachricht erhalten sollen) zugeleitet wird. Diese leiten die Nachricht wiederum über Schnittstellen 11 und über die jeweils geeigneten Übertragungsmechanismen an die Nachrichtenabnehmer 4 weiter. Die Eingangskomponente 2 empfängt des weiteren an derselben Schnittstelle "subscribe()" und "unsubscribe()"-Befehle von sich an- beziehungsweise abmeldenden Nachrichtenabnehmern 4 über den Weg 8. Dementsprechend richtet die Eingangskomponente 2 über Schnittstellen 9 die Ausgangskomponenten 5 ein beziehungsweise beseitigt diese nach Abmeldung. Die Eingangskomponenten richten für jeden Nachrichtenabnehmer (Subscriber) auf der Systemseite einer Ausgangskomponente, den Proxy, ein, der das Weiterleiten ankommender Nachrichten übernimmt. Somit ist jeder der eingerichteten Proxies, beziehungsweise der Ausgangskomponenten, mit genau einem bestimmten Nachrichtenabnehmer verbunden und übernimmt das Versenden von Nachrichten an diesen einen Abnehmer mittels eines bestimmten Übertragungsmechanismus.

Wie bereits ausgeführt, kann auch im erfindungsgemäßen Verfahren ein Nachrichtensender Nachrichten an logische Nachrichtenkanäle des Verteilersystems senden. Diese sind in Fig. 1 als Bereiche 12 des Verteilersystems 1 schematisch dargestellt.

Die Eigenschaften der einzelnen Teile und deren Kommunikation sollen im folgenden naher erläutert werden.

### Verteilersystem

Die Basis des gesamten Systems bildet eine Message-oriented-Middleware, die für das Empfangen und Verteilen aller MoM-Nachrichten zuständig ist, die in das System gelangen. Solche Nachrichten werden auch gespeichert gemäß den Eigenschaften einer Nachricht (Persistenz). Sie werden dann automatisch an weitere, später hinzukommende Nachrichtenabnehmer (Subscriber) geschickt. Die MoM übernimmt auch die Verwaltung sämtlicher Publisher, Subscriber und Topics (Nachrichtenkanäle) im System.

MoM-Nachrichten gelangen in das MoM-System ausschließlich über (verschiedene) Eingangskomponenten auf der Systemseite, und haben - abgesehen vom Inhalt - nichts zu tun mit den Nachrichten, wie sie von außen empfangen oder nach außen versendet werden.

### Eingangskomponente (Empfänger/Admin) auf Systemseite für einen bestimmten Mechanismus

Die Eingangskomponente auf Systemseite ist eine Schnittstelle nach außen für einen bestimmten Mechanismus, zum Beispiel SMS. Gemäß dieser Schnittstelle wird ein "publish()", "subscribe()"oder "unsubscibe()" Befehl aufgerufen beziehungsweise werden zum Beispiel Nachrichten in einem bestimmten Format (über den erwähnten Mechanismus, zum Beispiel SMS) empfangen, die als "publish()" beziehungsweise "subscribe()"-Befehl interpretiert werden können.

Nachrichten gelangen in das Verteilersystem vorzugsweise ausschließlich über die Eingangskomponente auf Systemseite über "publish()". Das "publish()" wird aufgerufen (beziehungsweise eine entsprechende Nachricht von außen empfangen), die Parameter (beziehungsweise Daten) interpretiert, zu einer Nachricht umgewandelt und in das System gespeist.

Beim Aufruf von "subscribe()" werden die Parameter interpretiert und eine entsprechende Ausgangskomponente (Proxy) gestartet, der das Weiterversenden von Nachrichten übernimmt.

Beim Aufruf von "unsubscribe()" werden die Parameter interpretiert und der entsprechende Proxy beendet.

### Nachrichtensender (Publisher) mittels eines bestimmten Mechanismus

Der Publisher (Nachrichtensender) gibt Nachrichten gemäß Schnittstelle der Eingangskomponente auf Systemseite und mittels "publish()" weiter. Im Fall von SMS sendet er zum Beispiel eine Nachricht in einem bestimmten Format, die alle Informationen enthält, damit sie bei der Eingangskomponente auf Systemseite entsprechend weitergeleitet werden kann.

### Nachrichtenabnehmer (Subscriber) eines bestimmten Mechanismus

Die Aufgabe des Subscriber ist zweigeteilt.

Erstens empfängt er Nachrichten mittels des eigenen Mechanismus, zum Beispiel SMS. Die empfangene Nachricht (gesendet von der Ausgangskomponente) unterscheidet sich prinzipiell nicht von beliebigen andern SMS-Nachrichten.

Zweitens, um dem System mitzuteilen, daß Nachrichten eines Topic (Nachrichtenkanals)in Zukunft auch an ihn weitergeleitet werden sollen, muß der Subscriber gemäß Schnittstelle der Eingangskomponente "subscribe()" aufrufen. Im Fall von SMS heißt das, daß er eine Nachricht in einem bestimmten Format sendet, die alle Informationen enthält, damit sie bei der Eingangskomponente auf Systemseite entsprechend interpretiert werden kann. Zum Abmelden wird analog "unsubscribe()" aufgerufen.

### "Publish()/Subscribe()"-Kommunikation bei der Anmeldung und Abmeldung

Über eine Schnittstelle der Eingangskomponente auf Systemseite müssen andere nachrichten-basierte Systeme am "Publish/Subscribe" des erfindungsgemäßen Gesamtsystems teilnehmen können. Dies geschieht durch das
■ Anmelden eines neuen Nachrichtenabnehmers mittels "subscribe()";
■ Abmelden eines Nachrichtenabnehmeers mittels "unsubscribe()";
■ Senden einer Nachricht mittels "publish()".

Die Schnittstelle ist auf das jeweilige nachrichten-basierte System zugeschnitten. Es kann sich dabei um ein reguläres API handeln, zum Beispiel eine Java-Interface-Klasse oder eine Web-Interface, oder um einen Empfänger von "Admin"-Nachrichten in einem bestimmten Format, zum Beispiel via SMS.

Die Signatur, beziehungsweise das Format, einer "Admin"-Nachricht hängt von der unterstützten Programmiersprache beziehungsweise dem unterstützten Nachrichten-Mechanismus ab, wird also im Rahmen der Erfindungsbeschreibung nicht anzugeben sein.

Wichtig ist aber, daß alle Informationen, die notwendig sind, um die entsprechende Funktionalität auszuführen, als Parameter, beziehungsweise Daten, übermittelt werden. Im einzelnen sind das die folgenden Informationen für "publish()"
■ der betreffende Nachrichtenkanal (Topic);
■ die Nachricht, die es zu versenden gilt;
und für "subscribe/unsubscribe()"
■ das betreffende Topic;
■ eindeutige Identifikation des (un)subscriber, zum Beispiel im Fall von SMS die Telefonnummer.

Prinzipiell sind auch generische Eingangs-Komponenten vorstellbar, die beispielsweise über Web verschiedene Arten von Ausgangskomponenten starten können, das heißt ein "subscribe()" anbieten, das zum Beispiel sowohl SMS- als auch Email-Subscriber unterstützt. Dazu muß lediglich das Interface von "(un)subscribe" entsprechend angepaßt werden durch zum Beispiel "subscribe(topic, type_dependent_information)" statt "subscribe(topic, type_dependent_information)".

### Starten einer Ausgangskomponente durch die Eingangskomponente auf Systemseite

Dieser Vorgang wird durch ein "subscribe()" getriggert, wie bereits oben angesprochen.

### Ausgangskomponente eines Subscriber mit einem bestimmten Mechanismus

Die Ausgangskomponente wird von der Eingangskomponente auf Systemseite gestartet und beendet. Sie repräsentiert einen bestimmten Nachrichtenabnehmer (Subscriber) auf Systemseite.

Die Ausgangskomponente (Proxy) meldet sich beim Start als erstes bei der darunterliegenden MoM (dem Verteilersystem) als Subscriber des entsprechenden Nachrichtenkanals an. Die dazu notwendigen Informationen wurden ihm beim Start mitgeteilt. Im weiteren Verlauf wird er deshalb von der MoM angesprochen, wenn dort neue Nachrichten für das Topic eingetroffen sind. Der Proxy empfängt die Nachrichten, wandelt sie um und sendet sie gemäß des Mechanismus des Subscriber, zum Beispiel SMS, an diesen weiter.

Die Ausgangskomponente meldet sich beim Beenden von der darunterliegenden MoM als Subscriber des entsprechenden Topic ab.

### Kommunikation von Ausgangskomponente und Nachrichtenabnehmer mit einem bestimmten Übertragungsmechanismus

Die versendeten Nachrichten einer Ausgangskomponente lassen sich vom Nachrichtenabnehmer als einem bestimmten Nachrichtenkanal zugehörig unterscheiden, zum Beispiel durch Einleitung der Nachricht mit dem Namen des Nachrichtenkanals. Ansonsten unterscheiden sich beim Nachrichtenabnehmer ankommende Nachrichten nicht von Nachrichten, die nicht aus dem Verteilersystem stammen.

Für die Anwendung des beschriebenen Ansatzes in einem gegebenen Gesamtsystem wird zunächst einmal ein bestehendes MoM-Produkt benötigt. Dieses wird wie gewohnt installiert (Server).

Für jeden Mechanismus, der vom System unterstützt werden soll, so daß entsprechende Nachrichtensender, beziehungsweise Nachrichtenabnehmer, Nachrichten austauschen können, zum Beispiel SMS, muß eine Eingangskomponente im Gesamtsystem implementiert werden. Diese ist einerseits abhängig von der darunterliegenden MoM, die das Verteilersystem implementiert, und ein MoM-Client, der MoM-Nachrichten weiterleitet. Andererseits ist er natürlich abhängig vom zu unterstützenden Nachrichten-Mechanismus. Die Schnittstelle für "publish()" und "subscribe()" bzw. "unsubscribe()" muß entsprechend definiert und realisiert werden. Für Nachrichtensysteme, die per se nur Nachrichten empfangen, also höchstens die Rolle eines Subscriber einnehmen werden, zum Beispiel Pager, genügt eine Schnittstelle, die "subscribe()" und "unsubscribe()" realisiert, zum Beispiel über eine spezielle Web-Schnittstelle.

Des weiteren muß die Ausgangskomponente realisiert werden, die ebenfalls einen MoM-Client darstellt, weil er MoM-Nachrichten entgegennimmt und umgewandelte, dem jeweiligen Mechanismus entsprechende Nachrichten verschickt.

Für Applikationen, die bereits MoM-Client darstellen und MoM-Nachrichten empfangen, beziehungsweise versenden, und die in das Gesamtsystem eingebunden werden sollen, erübrigt sich die Realisierung einer Eingangs- und Ausgangskomponente.

Der beschriebene Ansatz kann überall dort Verwendung finden, wo verschiedene nachrichten-basierte Systeme, wie Email und SMS, zum Datenaustausch benutzt werden und kombiniert werden sollen. Besonders wenn sich Sender und Empfänger (beziehungsweise deren Adressen) des öfteren ändern, bietet Publish/Subscribe einen Mechanismus, der mit wenig Konfigurationsaufwand auskommt.

Im folgenden soll eine konkrete Anwendung der vorliegenden Erfindung als beispielhafte Ausführungsform beschreiben werden.

Im T&D-Betrieb sind Unterstationen zumeist unbemannt. Ein Netzwerkbetrieb wird durch ein Netzwerkkontrollzentrum gesteuert. Alarmmeldungen werden oft an das Netzwerkkontrollzentrum übertragen, von wo aus Maßnahmen ergriffen werden, um das Netzwerk operativ zu halten und/oder beispielsweise Wartungspersonal zu informieren. Aus Gründen der Redundanz wird oft ein separater Telealarmkanal unmittelbar von der betroffenen Substation zum diensthabenden Personal geschickt.

Der zuständige diensthabende Wartungsmitarbeiter wechselt beispielsweise im Schichtbetrieb alle acht Stunden. Dies wird im Moment gelöst, indem der Telealarmempfänger von einer Schicht zur nächsten manuell weitergegeben wird oder indem Telefonnummern in den Telealarmsendern rekonfiguriert werden.

Im allgemeinen gibt es verschiedene Arten von diensthabenden Personen für unterschiedliche Arten von Alarmen:
■ primäre Ausrüstungsalarme
■ sekundäre Ausrüstungsalarme
■ Schutzalarme
■ Netzwerkstabilitätsalarme (die normalerweise im von Personal besetzten Netzwerkkontrollzentrum gehandhabt werden).

Diese unterschiedlichen Kategorien werden in derzeitigen Systemen auf Grund der hohen Kosten von Telealarmkanälen normalerweise nicht berücksichtigt.

Weiterhin kann die Verantwortlichkeit von wartungs- und diensthabendem Personal in verschiedene (Netzwerk)Regionen verteilt sein. Im Falle, daß die diensthabende Person dann den Fehler analysiert und eine Wartungsmannschaft mobilisiert eventuell von einem spezialisierten Wartungsunternehmen, wird er sich dafür interessieren, wie der Zustand der Ausrüstung während der Wartung ist, wie das Resultat der Wartung ist und wann der normale Betrieb wieder aufgenommen werden kann, beziehungsweise wieder aufgenommen ist. Das diensthabende Personal (welches während der Wartungsarbeit zudem wechseln kann), ist daher über diesen Sachverhalt von der Wartungsgruppe zu informieren.

Alle diese Probleme können gelöst werden durch Verwendung des erfindungsgemäßen Nachrichtenverteilsystems und unter Angabe der oben definierten Klassifikation in Form von Themen (Nachrichtenkanälen) und unter Angabe der betroffenen Unterstation beziehungsweise des Orts, wo der Alarm ausgelöst worden ist, beziehungsweise wo die Wartungsarbeit durchgeführt werden muß. Alle Personen, die in Alarmnachrichten in einer Kategorie oder eines Orts oder an Wartungsstatusberichte für eine Kategorie beziehungsweise einen Ort interessiert sind, melden sich unter Angabe eines Nachrichtenkanals beim Systems an. Falls vorgegebene Dienstschichten existieren, können Werkzeuge eingerichtet werden, welche automatisch eine Liste von Orten beziehungsweise Regionen entsprechend automatisch anmelden beziehungsweise abmelden. Weitere Anwendung wie Fehlerüberwachung und Analyse-Software können sich bei den entsprechenden Alarmnachrichtenkanälen anmelden, wobei die Konfiguration des automatischen Fehlerevaluierungssystems durch Anmeldungen von dem neu gelieferten System an existierende

Das Unterstationsautomatisierungssystem oder die Feeder-Steuerungseinheit erzeugt lediglich Alarmnachrichten für die Nachrichtenkanäle, welche im Falle einer Feeder-Kontrolleinheit, beispielsweise durch GSM/SMS gesendet werden können. Die Middle-oriented-Messageware, deren Nachrichtenempfänger dynamisch durch entsprechende Anmeldungen konfiguriert werden, leiten Alarm und Wartungsstatusnachrichten in alle interessierten Kreise weiter, beispielsweise als eine Nachricht an ein Anwendungsprogramm, oder als SMS oder e-mail-Nachrichten durch geeignete Gateways.

### Bezugszeichenliste

- 1: Verteilersystem
- 2: Eingangskomponente
- 3: Nachrichtensender (Publisher)
- 4: Nachrichtenabnehmer (Subscriber)
- 5: Ausgangskomponente (Proxy)
- 6: Übertragungsweg eingehende Nachricht
- 7: Schnittstelle Eingangskomponente/Verteilersystem
- 8: Übertragungsweg An-/Abmeldung
- 9: Schnittstelle für Administration von Ausgangskomponenten
- 10: Schnittstelle Verteilersystem/Ausgangskomponente
- 11: Übertragungsweg ausgehende Nachricht
- 12: Nachrichtenkanäle

## Patentansprüche

1. Nachrichtenverteilsystem mit zumindest zwei verschiedenen Übertragungs-Mechanismen für Nachrichten, mit
zumindest einer Eingangskomponente (2) zum Empfangen von Nachrichten über zumindest einen Mechanismus von zumindest einem Nachrichtensender (3), der Nachrichten mit diesem Mechanismus aussenden kann oder aussendet;
zumindest einer Ausgangskomponente (5) zum Senden von Nachrichten an jeweils einen Nachrichtenabnehmer (4), wobei die Nachrichten über einen für den Nachrichtenabnehmer (4) geeigneten Mechanismus gesendet werden; und
einem Verteilersystem (1) zum Weiterleiten der von der zumindest einen Eingangskomponente (2) empfangenen Nachrichten an die zumindet eine Ausgangskomponente (5).

2. Nachrichtenverteilsystem nach Anspruch 1, **dadurch gekennzeichnet, daß** die Eingangskomponente, das Verteilersystem (1) oder/und die Ausgangskomponente (5) aufweist Mittel zur Konvertierung von Nachrichten eines Formats in Nachrichten desjenigen Formats, das der Nachrichtenabnehmer, der von der Ausgangskomponente bedient wird, lesen kann.

3. Nachrichtenverteilsystem nach Anspruch 1 oder 2, **dadurch gekennzeichnet, daß** für jeden Übertragungs-Mechanismus eine Eingangskomponente (2) vorgesehen ist.

4. Nachrichtenverteilsystem nach einem der Ansprüche 1 bis 3, **dadurch gekennzeichnet, daß** die zumindest eine Eingangskomponente (2) aufweist Mittel zum Anmelden und Abmelden von Nachrichtenabnehmern (4) und/oder Nachrichtensendern (3) bei dem Nachrichtenverteilsystem.

5. Nachrichtenverteilsystem nach einem der Ansprüche 1 bis 4, **dadurch gekennzeichnet, daß** das Verteilersytem logische Kanäle (12) aufweist, an die Nachrichten von dem zumindest einen Nachrichtensender (3) geschickt werden oder geschickt werden können.

6. Nachrichtenverteilsystem nach Anspruch 5, **dadurch gekennzeichnet, daß** die zumindest eine Eingangskomponente (3) Mittel zur Identifizierung eines logischen Kanals (12) aufweist, an den eine empfangene Nachricht weitergeleitet werden kann oder weitergeleitet wird.

7. Nachrichtenverteilsystem nach einem der Ansprüche 1 bis 6, **dadurch gekennzeichnet, daß** die zumindest eine Eingangskomponente Einrichtmittel aufweist, die Ausgangskomponenten (5) für angemeldete Nachrichtenabnehmer (4) einrichtet oder startet und die Ausgangskomponenten (5) für sich abmeldende Nachrichtenabnehmer (4) beendet.

8. Nachrichtenverteilsystem nach einem der Ansprüche 1 bis 7, **dadurch gekennzeichnet, daß** es ein auf verschiedene Einheiten verteiltes System ist.

9. Nachrichtenverteilsystem nach Anspruch 8, **dadurch gekennzeichnet, daß** es auf den Geräten eines Netzwerks installiert ist.

10. Nachrichtenverteilsystem nach einem der Ansprüche 1 bis 9, **dadurch gekennzeichnet, daß** die zumindest eine Eingangskomponente (2) Verwaltungsmittel zur Auswertung von in den Nachrichten enthaltenen Verwaltungsinformation aufweist.

11. Nachrichtenverteilsystem nach Anspruch 10, **dadurch gekennzeichnet, daß** die Verwaltungsinformationen beinhalten Nachrichtenadressaten, Nachrichtenpersistenzen und Nachrichtenprioritäten.

12. Nachrichtenverteilsystem nach einem der Ansprüche 1 bis 11, **dadurch gekennzeichnet, daß** die verwendeten Übertragungs-Mechanismen Small Message System (SMS), elektronische Post, Fax, Internet Relay chat, oder http sind.

13. Nachrichtenverteilsystem nach einem der Ansprüche 1 bis 12, **dadurch gekennzeichnet, daß** das Verteilersystem (1) ein Java Messaging System kompatibles System ist.

14. Nachrichtenverteilsystem nach einem der Ansprüche 1 bis 13, **dadurch gekennzeichnet, daß** das Verteilersystem (1) einen Speicher aufweist, in dem Nachrichten für einen vorgegebenen Zeitraum zwischengespeichert werden können.

15. Nachrichtenverteilsystem nach einem der Ansprüche 1 bis 14, **dadurch gekennzeichnet, daß** es in einem Energieversorgungs-Unterstationssystem implementiert ist, wobei die Nachrichtensender (3) Einheiten des Systems sind und die Nachrichtenabnehmer (4) Überwachungsgeräte, Steuerungsgeräte, Alarmgeräte und/oder Wartungsgeräte.

16. Nachrichtenverteilsystem nach einem der Ansprüche 1 bis 15, **dadurch gekennzeichnet, daß** es ein Computerprogrammprodukt ist, dessen Bestandteile zumindest teilweise direkt in den Hauptspeicher einer oder mehrerer digitaler Datenverarbeitungsanlagen geladen werden können und dessen Programmbestandteile von der zumindest einen Datenverarbeitungsanlage ausgeführt werden können.

17. Verfahren zur Verteilung von Nachrichten in einem Nachrichtenverteilsystem mit folgenden Schritten:
- Empfangen einer Nachricht von einem Nachrichtensender (3) über einen Übertragungs-Mechanismus an eine Eingangskomponente (2);
- Übergeben der Nachricht von der Eingangskomponente (2) an ein Verteilersystem (1);
- Weiterleiten der Nachricht von dem Verteilersystem (1) an zumindest eine Ausgangskomponente (5); und
- Senden der Nachricht von der Ausgangskomponente (5) an einen Nachrichtenabnehmer (4) über einen für den Nachrichtenabnehmer (4) geeigneten Übertragungs-Mechanismus,
wobei das Verfahren zumindest zwei verschiedene Mechanismen der Nachrichtenübersendung verwenden kann.

18. Verfahren nach Anspruch 17, **dadurch gekennzeichnet, daß** für jeden Übertragungs-Mechanismus eine Eingangskomponente (3) vorgesehen ist.

19. Verfahren nach Anspruch 17 oder 18, **dadurch gekennzeichnet, daß** die Eingangskomponente (2) die Nachricht in ein vom Verteilersystem (1) verwendbares Zwischenformat umwandelt.

20. Verfahren nach einem der Ansprüche 17 bis 19, **dadurch gekennzeichnet, daß** die Ausgangskomponente (5) die vom Verteilersystem (1) weitergeleitete Nachricht aus einem vom Verteilersystem (1) verwendeten Zwischenformat in ein Format verwandelt, daß über den von der Ausgangskomponente (5) verwendeten Übertragungs-Mechanismus übertragbar ist und vom Nachrichtenabnehmer verarbeitet werden kann.

21. Verfahren nach einem der Ansprüche 17 bis 20, **dadurch gekennzeichnet, daß** ein Nachrichtenabnehmer (4) einer Eingangskomponente (2) eine Nachricht schicken kann, welche eine Anmeldungs- oder Abmeldungsinformation aufweist, und das Verfahren folgende Schritte aufweist:
- falls die Information eine Anmeldungsinformation ist, Anmelden des Nachrichtenabnehmers (4) bei dem Nachrichtenverteilsystem und Einrichten einer Ausgangskomponente (5), die dem Nachrichtenabnehmer (4) für ihn bestimmte Nachrichten über einen für ihn geeigneten Übertragungs-Mechanismus senden kann;
- falls die Information eine Abmeldungsinformation ist, Abmelden des Nachrichtenabnehmers (4) bei dem Nachrichtenverteilsystem; und Löschen der ihm zugeodneten Ausgangskomponente (5).

22. Verfahren nach einem der Ansprüche 17 bis 21, **dadurch gekennzeichnet, daß** die Nachrichtensender (3) Nachrichten an logische Nachrichtenkanäle (12) des Verteilersystems (1) senden.

23. Verfahren nach Anspruch 22, **dadurch gekennzeichnet, daß** die Anmeldung eines Nachrichtenabnehmers (4) beim Nachrichtenverteilsystem unter Angabe zumindest eines logischen Nachrichtenkanals (12) erfolgt, von dem der Nachrichtenabnehmer (4) Nachrichten erhalten möchte, die an diesen Nachrichtenkanal (12) gesendet worden sind.

24. Verfahren nach einem der Ansprüche 17 bis 23 **dadurch gekennzeichnet, daß** die Nachrichten im Verteilersystem (1) für einen vorgegebenen Zeitraum zwischengespeichert werden und neu angemeldeten Nachrichtenabnehmern (4) gesendet werden können.

25. Verfahren nach einem der Ansprüche 17 bis 24, **dadurch gekennzeichnet, daß** die Nachrichten eine Prioritätsinformation enthalten, anhand der das Verteilersystem (1) die Reihenfolge der Weiterleitung der Nachrichten bestimmen kann.

26. Verwendung eines Middleware Messaging Systems zum Verteilen von Nachrichten von Nachrichensendern an Nachrichtenabnehmer, wobei die Nachrichten zum und vom Middleware Messaging System über zumindest zwei verschiedene Übertragungs-Mechanismen versendet werden.
